# EUROPEAN PATENT SPECIFICATION

(11) **EP 2 933 619 B1**
(45) Date of publication and mention of the grant of the patent: **10.04.2019**
(21) Application number: 14305588.7
(22) Date of filing: 18.04.2014
(51) Int. Cl.: G01K 11/26

(54) **A differential temperature measuring device comprising surface transverse wave resonators**
Differenzielle Temperaturmessvorrichtung mit transversalen Oberflächenwellenresonatoren
Dispositif de mesure de température différentielle comprenant des résonateurs à ondes transversales de surface

(43) Date of publication of application: 21.10.2015
(73) Proprietor: CENTRE NATIONAL DE LA RECHERCHE SCIENTIFIQUE -CNRS-, 75794 Paris Cedex 16 (FR); ECOLE NATIONALE SUPERIEURE DE MECANIQUE ET DES MICROTECHNIQUES, 25030 Besançon (FR)
(72) Inventor: Ballandras, Sylvain, 25000 Besancon (FR); Saklharov, Serguey, 107023 Moscow (RU); Naumenko, Natalya, 117452 Moscow (RU); Plesski, Viktor, 2025 Chez-le-Bart (CH)
(74) Representative: Lavoix

(56) References cited:
- FR-A1- 2 907 284
- US-A1- 2011 101 822

## Description

### 1. FIELD OF THE INVENTION

The invention relates to the design of temperature measuring devices, and, more specifically, to differential temperature measuring devices based on surface acoustic waves, also know as SAW devices or SAW sensors.

The present invention can be applied notably, but not exclusively, in the development of passive wireless sensors for high temperature applications, for example for temperatures exceeding 300°C.

### 2. TECHNOLOGICAL BACKGROUND

SAW sensors are well known in the prior art. Typically, a surface acoustic wave sensor is fabricated at the surface of a piezoelectric substrate. The surface wave is generated and detected by a metallic transducer composed by the imbrication of two comb-like electrodes deposited atop the substrate, the so-called inter-digitated transducer (IDT). Temperature or stress variations applied to the piezoelectric substrate result in a deformation of the latter and a variation in the velocity of the surface acoustic waves. These thermo-mechanical effects will result in a variation of the resonance frequency (resonator) or of the delay (delay lines) of the electrical response of the surface acoustic wave device.

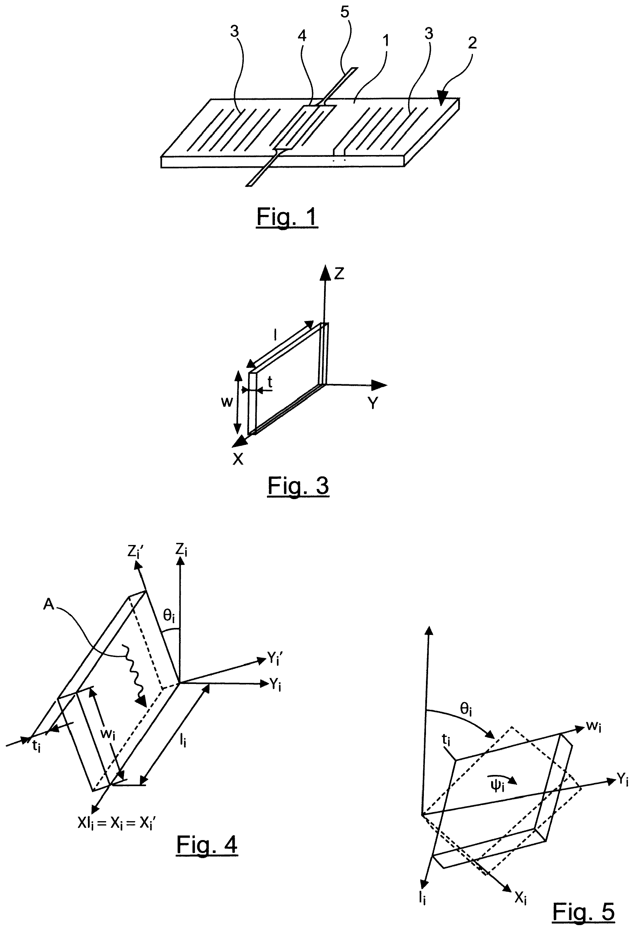

To measure frequency variations accurately, a surface acoustic wave device usually includes a surface acoustic wave resonator 1 on surface of the piezoelectric substrate 2 having a given crystalline orientation, whereby electric signals are converted into or reconverted from surface acoustic waves. The surface acoustic wave resonator 1 comprises an inter-digitated transducer (also called IDT) 4, placed between two reflector arrays 3, as illustrated in **Figure 1****.** These arrays are operating at the so-called Bragg condition and therefore reflect the incident waves in phase at the resonance (or Bragg) frequency.

Surface acoustic waves are generated and detected on the piezoelectric substrate 2 by means of the inter-digitated transducer 4. Application of an alternative electric voltage between electrodes creates a periodic electric field which creates mechanical dilatation and compression in the vicinity of the surface, thereby producing surface acoustic waves. The arrays of electrodes forming the inter-digitated transducer 4 are usually spaced at a half or one-quarter of wavelength which corresponds to the operating central frequency. The reflector arrays 3 act as Bragg mirrors that trap the electro-acoustic energy within the inter-digitated transducer 4 (acting as a central resonant cavity) and therefore yield resonance frequencies for which the round-trip path in the cavity is equal to an integral number of wavelengths. The resonance modes for these frequencies are excited by the transducer 11 placed between the mirrors 13.

The possibility of remotely interrogating surface acoustic wave sensors is also known. The principle is that of connecting the transducer input and output to a radio-frequency (RF) antenna 5. Electromagnetic signals received by the surface acoustic wave sensor via the RF antenna 5 are converted into surface acoustic waves (electro-acoustic conversion) by means of the inter-digitated comb transducer 4 and the piezoelectric properties of the piezoelectric substrate 2 which is used. The surface acoustic waves propagate in the overlapping area of electrodes. Surface acoustic wave properties are modified as a function of temperature to which the surface acoustic wave sensor is subjected, which affects the acoustic wave propagation conditions at the substrate surface. Surface acoustic waves are then themselves converted into electromagnetic signals via the RF antenna connected to the transducer output, the signal thus emitted carries information related to temperature measurements (resonance frequency or delay, depending on the device structure).

By having electrodes placed on both sides of the transducer 4 which play the role of reflector arrays 3, a single resonance-mode resonator is created that is characterized by a given resonance frequency. This resonance frequency mainly depends on the propagation velocity of acoustic waves at the substrate surface, under the periodic array of electrodes, the propagation velocity itself depending on the temperature of the substrate. The resonance frequency monitoring allows for performing temperature measurements. Thus, the surface acoustic wave sensor has a response at the resonance frequency of the resonator and it is possible to deduce the temperature to which the surface acoustic wave sensor is subjected remotely. The choice of piezoelectric material for surface acoustic wave sensors is especially based on:
- Surface acoustic wave propagation velocity;
- Electromechanical coupling coefficient (hereafter called k²) that reflects the efficiency of conversion from electric energy to mechanical energy and vice versa;
- Beam steering angle representing the difference between the wave-front and power propagation direction (generally chosen as close as possible to zero degree);
- Temperature Coefficient of Frequency (hereafter called TCF), that reflects the frequency drift under temperature variations.

The operating frequency band of such sensors is usually the ISM band (for "Industrial, Scientific, Medical") having a central frequency of 434 MHz and an operating spectral width of 1.7 MHz, allowing for a free exploitation of the remote system.

Measurements of physical parameters at high temperature (for example temperatures exceeding 300°C) require materials robust enough to withstand these harsh operation conditions. Surface acoustic wave sensors represent an attractive solution in that purpose, as some piezoelectric materials reveal capable to operate at very high temperatures without structural degradation and still exhibiting piezoelectric properties allowing for wireless temperature measurements. For wireless temperature measurements, a differential measurement approach is usually required to provide on one hand the absolute temperature estimation and on the other hand the robustness of the measurement set-up by elimination of correlated noise and perturbation sources (for example RF link modification, stresses, vibrations etc.).

A known solution consists in using two surface acoustic wave resonators arranged on a quartz substrate so as to be inclined to one another at a certain angle, as described in document FR2864618. Temperature sensor for e.g. surface acoustic wave device, has resonators with transducers constituted of inter-digitated electrodes, where control buses of one transducer are inclined at a non-zero angle with respect to the normal of the electrodes as described in document US 7549791. A first resonator for which the propagation direction of surface acoustic waves is according to a direction X corresponding to the so-called X crystal axis of the quartz substrate is coupled with a second resonator inclined with an angle from the X axis, thereby using another propagation direction. Inclining the second resonator with respect to the first resonator enables to give it a different sensitivity towards temperature. Another example of a set of two surface acoustic wave resonators can be found in FR 2 907 284 A1.

However, this known solution has several drawbacks.

This kind of differential temperature sensor is relatively complex to implement. As it requires two different wave propagation directions, the resonators must be arranged on the quartz substrate so that surface acoustic waves that propagate for each of the two resonators must not interfere. This implies an accurate placement and orientation of the two resonators on the substrate. This further occupies a certain surface that is difficult to reduce, since the two resonators should not overlap with one another in terms of wave propagation.

In addition the inventors have highlighted that the electromechanical coupling offered by this known sensor is relatively low, thereby representing to a limitation in terms of interrogating distances.

### 3. GOALS OF THE INVENTION

The invention, in at least one embodiment, is aimed especially at overcoming these different drawbacks of the prior art.

More specifically, it is a goal of at least one embodiment of the invention to provide a differential temperature measuring device of new conception for which assembly is simple to implement and ensures an improved electromechanical coupling.

It is another goal of at least one embodiment of the invention to provide a differential temperature measuring device that has a compact and simple design.

It is another goal of at least one embodiment of the invention to provide a differential temperature measuring device that is highly resistant to high temperatures and ageing.

### 4. SUMMARY OF THE INVENTION

A particular embodiment of the invention proposes a differential temperature measuring as defined in claim 1.

The general principle of the invention is that of using surface transverse wave resonators of the same resonance features formed on two distinct substrates made of Langasite crystal selected for their specific thermal sensitivity and used by pair for developing a differential temperature measuring device. Indeed, the two Langasite substrates having different double-rotation cuts allow them to exhibit a specific thermal sensitivity and a frequency-differential temperature behaviour favourable to temperature measurement in a given environment. One of advantages of using a differential structure is that frequency difference of resonators is substantially linear as a function of the temperature and residual non-linearities can be corrected.

The invention further enables to make differential temperature measurements while breaking down problems of surface acoustic wave interferences. Arranging two surface transverse wave resonators on two separated Langasite substrates avoids the need to arrange and orient accurately the resonators to each other (so that surface acoustic waves that propagate for each of the resonators does not interfere), in order to ensure accurate temperature measurements. This therefore leads to a simplification of implementation of differential temperature sensor. In particular the invention offers a differential temperature sensor that has a more compact and simple design than that of the prior art devices.

In addition, using Langasite substrate allows for high temperature measurements because of its high temperature fusion point.

According to a particular feature, said first and second piezoelectric substrates have each a double-rotation cut and a propagating direction determined such that cut angles represented by the nomenclature (YᵢXᵢ*l*ᵢ*t*ᵢ)/θᵢ/ψᵢ of standard IEEE 1949 Std-176 are such as: -140° < θᵢ < -70° and ψᵢ = 90°, with:
- *lᵢ* being length of the piezoelectric substrate i
- *tᵢ*, being thickness of the piezoelectric substrate i
- Xᵢ, Yᵢ, Zᵢ being crystallographic axis of the piezoelectric substrate i
- θᵢ being the cut angle allowing a rotation around the piezoelectric substrate length *lᵢ*
- ψᵢ being the cut angle allowing a rotation around the piezoelectric substrate thickness *tᵢ*
- YᵢXᵢ being a plane defined by the axis Yᵢ and Xᵢ from which rotations of θᵢ and ψᵢ cut angles are performed, Xᵢ and Yᵢ being the axis according to which the piezoelectric substrate length *lᵢ* and thickness *tᵢ* are considered respectively
- i being an index equal to 1 for said first piezoelectric substrates and equal to 2 for said second piezoelectric substrates,
the θᵢ cut angle of said first piezoelectric substrate being different from the θᵢ cut angle of said second piezoelectric substrate.

It is thus possible to select two different double-rotation cuts allowing the substrates to exhibit a specific thermal sensitivity and a frequency-differential temperature behaviour favourable to temperature measurement in a given environment.

According to a feature of claim 1, when said first piezoelectric substrate has a crystalline orientation defined by X₁, Y₁, Z₁ crystal axis, said first surface acoustic wave resonator comprises in a plane defined by the X₁, Z₁ axis an array of electrodes whose orientation is parallel with respect to the X₁ crystal axis and perpendicular with respect to the Z₁ crystal axis, and when said second piezoelectric substrate has a crystalline orientation defined by X₂, Y₂, Z₂ crystal axis, said second surface acoustic wave resonator comprises in a plane defined by the X₂, Z₂ axis an array of electrodes whose orientation is parallel with respect to the X₂ crystal axis X₂ and perpendicular with respect to the Z₂ crystal axis.

Each array of electrodes acts as a transducer for exciting and/or receiving surface transverse waves and for propagating surface transverse waves in a propagation direction.

According to a particular feature, said array of electrodes of each of said first and second surface acoustic wave resonators comprises a periodic array of inter-digitated electrodes placed between two reflector arrays, said periodic array of inter-digitated electrodes acting as a central resonant cavity and said two reflector arrays acting as Bragg mirrors.

According to a feature of claim 1, said array of electrodes of each of said first and second surface acoustic wave resonators has:
- a relative thickness that satisfies the following equality: 0.5% < h/λ_{ac} < 13% with:
   h the thickness of electrodes of said first and second surface acoustic wave resonators,
   λ_{ac} the acoustic wavelength of said first and second surface acoustic wave resonators;
- a relative metallisation ratio that satisfies the following equality: 0.3 < a/p < 0.7 with:
   a the width of the electrodes of said first and second surface acoustic wave resonators;
   p the mechanical period of said array of electrodes.

Thus the resonator effectiveness of the differential temperature device as well as the electromechanical coupling are improved. Indeed, the inventors discovered that the nature of electrodes and their thickness have a significant impact on the electromechanical coupling and reflection coefficients of the differential temperature device.

According to a particular feature, said array of electrodes of each of said first and second surface acoustic wave resonators is made of a single metal or a combination of metals belonging to the group comprising: Pt, Ni, Mo, W, Cu, Cr, Au, Ir, Pd, Ta, Ti, Zr.

These metals or metal alloys are high temperature resistant.

This list is not exhaustive. More generally conductive materials composed of these metals and all other metals exhibiting mass density overcoming the one of Langasite or a metallic alloy meeting the same property can be considered as a potentially usable metal according the invention.

According to a first exemplary embodiment, said array of electrodes of each of said first and second surface acoustic wave resonators are made of Platinum (Pt) and:
- the relative thickness satisfies the following equality: 0.5% < h/λ_{ac} < 7%,
- the relative metallisation ratio satisfies the following equality: 0.3 < a/p < 0.7.

According to a second exemplary embodiment, said array of electrodes of each of said first and second surface acoustic wave resonators are made of Nickel (Ni) and:
- the thickness satisfies the following equality: 0.5% < h/λ_{ac} < 10%,
- the relative metallisation ratio satisfies the following equality: 0.3 < a/p < 0.7.

According to a third exemplary embodiment, said array of electrodes of each of said first and second surface acoustic wave resonators are made of Molybdenum (Mo) and:
- the thickness satisfies the following equality: 0.5% < h/λ_{ac} < 9%,
- the relative metallisation ratio satisfies the following equality: 0.3 < a/p < 0.7.

According to a fourth exemplary embodiment, said array of electrodes of each of said first and second surface acoustic wave resonators are made of Tungsten (W) and:
- the thickness satisfies the following equality: 0.5% < h/λ_{ac} < 7%,
- the relative metallisation ratio satisfies the following equality: 0.3 < a/p < 0.7.

According to a particular feature, said array of electrodes of each of said first and second surface acoustic wave resonators has a thickness h comprised between 100 nm and 500 nm.

### 5. LIST OF FIGURES

Other features and advantages of embodiments of the invention shall appear from the following description, given by way of an indicative and non-exhaustive examples and from the appended drawings, of which:
- Figure 1, already described in relation to technological background, provides a schematic illustration of a prior art differential temperature sensor;
- Figure 2 provides a schematic illustration of a differential temperature sensor according to a particular embodiment of the invention;
- Figure 3 is a schematic illustration of a YX-cut plate before any rotation in accordance with standard IEEE 1949 Std-176 of a Langasite (La₃Ga₅SiO₁₄) crystal of index i;
- Figure 4 is a schematic illustration of a single-rotation cut noted (YᵢXᵢ*l*ᵢ)/θᵢ according to standard IEEE 1949 Std-176 of a Langasite crystal of index i;
- Figure 5 is a schematic illustration of a double-rotation cut noted (YᵢXᵢ*l*ᵢ*t*ᵢ)/θᵢ/ψᵢ according to standard IEEE 1949 Std-176 of a Langasite crystal of index i,
- Figure 6 exhibits the evolution of the frequency-temperature behaviour for θ cut angles varying between -160° and -40° for a Langasite substrate;
- Figure 7 shows the evolution of surface transverse wave propagation velocity and electromechanical coupling coefficient for θ cut angles varying between -160° and -40° for a Langasite substrate;
- Figure 8 shows the evolution of reflection coefficient for θ cut angles varying between -160° and -40° for a Langasite substrate;
- Figures 9A and 9B show a set of theoretical curves highlighting the impact of the nature and structural features of the electrode arrays on the electromechanical coupling and reflection coefficients of the sensor according to the invention.

### 6. DETAILED DESCRIPTION

In all of the figures of the present document, identical elements and steps are designated by the same numerical reference sign.

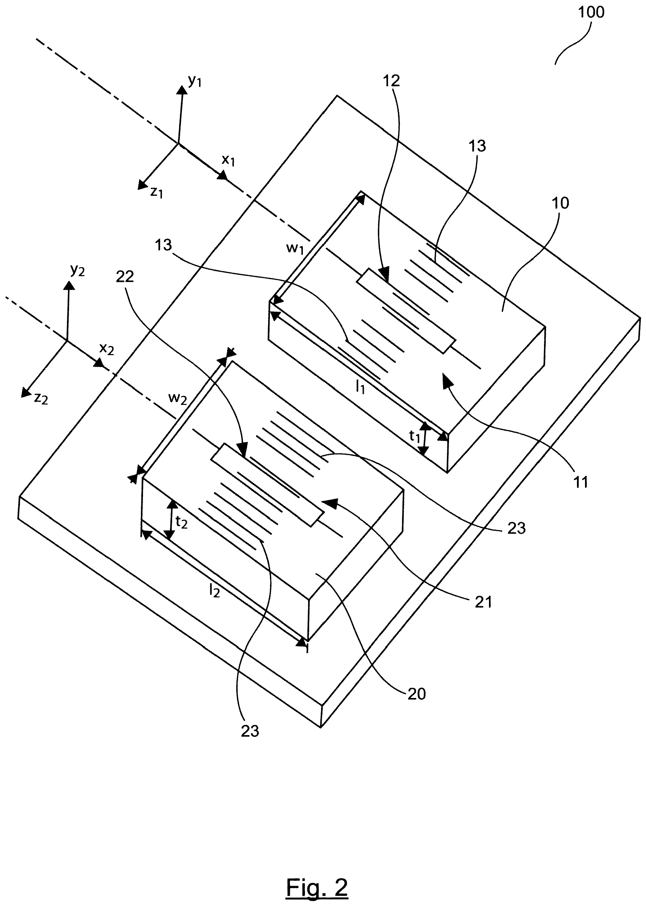

The general principle of the invention is based on the use of two surface transverse wave resonators of the same resonance configuration and formed on two separated Langasite substrates selected for their specific thermal sensitivity, and used by pair (coupling) in order to present a frequency-differential temperature behaviour, as illustrated in **Figure 2****.**

Surface Transverse Waves (STW) on quartz have been studied by Auld et Al and Gulayev et al to overcome some given limitations related to Rayleigh waves such as electromechanical coupling, propagation velocities, power handling and quality factors. Contrarily to Rayleigh waves, STW exhibit a scalar mechanical polarisation close to Bleustein-Gulayev wave polarisation but require the existence of a continuous corrugation for guiding purpose. Furthermore, they only exist for given crystal angle configurations and symmetries. They can be excited on single-rotation Quartz cuts and on similar symmetry class materials (Gallium Orthophosphate, Langasite, Langanite, Langatate, GeO2, etc.) along the so-called Z' axis, i.e. rotated Z axis (around X axis) corresponding to the optical axis exhibiting a ternary symmetry. For given cut angles, this wave may overcome all the above-mentioned limitations of Rayleigh waves. They have been studied on Langasite mainly by Plesski (J. Koskela, S. Lehtonen, V. P. Plessky, and M. M. Salomaa, "Surface transverse waves on langasite", Appl. Phys. Lett., Vol. 72, pp. 2665-2667, 1998) who emphasised the existence of a crystal cut exhibiting a 0 TCF near room temperature.

Figure 2 shows the simplified structure of a differential temperature sensor 100 according to a particular embodiment of the invention. This device 100 comprises:
- a first surface transverse wave resonator 11 formed on the surface of a first piezoelectric substrate 10 made of a single crystal of lanthanum gallium silicate (La₃Ga₅SiO₁₄), also known as Langasite.
- a second surface transverse wave resonator 21 formed on the surface of a second piezoelectric substrate 20 made of a single crystal of lanthanum gallium silicate, also known as Langasite.

In that exemplary embodiment, the first surface transverse wave resonator 11 comprises an inter-digitated transducer 12, consisting of two interlinked metal electrodes, placed between two reflector arrays 13. The second surface transverse wave resonator 21 comprises an inter-digitated transducer 22, consisting of two interlinked metal electrodes, placed between two reflector arrays 23. The first inter-digitated transducer 12 can be connected to a radio-frequency antenna (not shown). The second inter-digitated transducer 22 also can be connected to a radio-frequency antenna (not shown) in order to make possible remotely temperature measurements. In a particular embodiment of the invention, the two inter-digitated transducers can be connected in parallel and connected to a single radio-frequency antenna to allow for wireless interrogation of the so-formed differential sensor.

Throughout the rest of the document it is assumed that the inter-digitated transducer and reflector arrays for each resonator are simply assimilated to a metal electrode structure. It is however noted and known by the man of the art that the reflector may also consist of a periodic groove grating wherein the electrodes are replaced by grooves etched directly in the substrate.

According to the invention, the surface transverse wave resonator 11 has a predetermined resonance configuration that is identical to the predetermined resonance configuration of the surface transverse wave resonator 21. This means that the metal electrode structure design and direction of the resonator 11 are the same of those of the resonator 21. For example, the inter-digitated transducers 12 and 22 are each formed of metal electrodes having a mechanical period p of 2.8 µm (i.e. an acoustic wavelength λ_{ac} = 5.6 µm), each metal electrode having a width a of 0.8 to 2.2 µm (the width of the electrode is adjusted to optimise the coupling coefficient for instance, or to manage the transducer directivity and the electrode reflectivity), i.e. a relative metal ratio a/p ranging from 0.3 to 0.8. Each reflector arrays 13 and 23 comprises a periodic array of metal electrodes having a period of 2.5 to 3.2 µm (the period of the mirror is adjusted in such a way that the centre of its frequency stop-band coincides with the IDT's synchronism/resonance frequency) and a width of 0.7 to 2.6 µm (according the mirror mechanical period). The metal electrode structure of both resonators 11 and 21 have the same design and are oriented in the same direction, such that they exhibit the same resonance configuration. Thickness h of all electrodes is of 350 nm for instance, but can be comprised typically between 100 nm and 500 nm.

It should be noted that the number of electrodes constituting each of the STW resonators 11 and 22 illustrated in figure 2 is limited purely for the purposes of pedagogical description, and so as not to burden the figure and the associated description. Of course, a greater number of metal electrodes is suggested, for example 10 to 100 pairs of electrodes in the interdigitated transducer and 10 to 500 electrodes in each mirror.

In the exemplary embodiment as illustrated here, the electrodes are made of platinum (Pt), assuming a thin adhesion layer (for instance Cr or Ti or Ta) needed to prevent Pt peel-off. However, it could be envisaged an alternative embodiment in which, the electrodes can be composed of a metal or a combination of metals belonging to the following list: Pt, Ni, Mo, W, Cu, Cr, Au, Ir, Pd, Ta, Ti, Zr.

The Langasite substrate 10 has a crystalline orientation defined by X₁, Y₁, Z₁ crystal axis. The first surface transverse wave resonator 11 is comprised in the plane defined by the X₁, Z₁ axis and the array of electrodes of which it is constituted are arranged in parallel with respect to the X₁ crystal axis and perpendicular with respect to the Z₁ crystal axis.

The Langasite substrate 20 has a crystalline orientation defined by X₁, Y₁, Z₁ crystal axis. The second surface transverse wave resonator 21 is comprised in the plane defined by the X₂, Z₂ axis and the array of electrodes of which it is constituted are arranged in parallel with respect to the X₂ crystal axis and perpendicular with respect to the Z₂ crystal axis.

In that exemplary embodiment, the Langasite substrate 10 has a double rotation cut and a propagating direction determined such that cut angles are: (Y₁X₁l₁t₁)/-80°/90° and the Langasite substrate 20 has a double-rotation cut and a propagating direction determined such that cut angles are: (Y₁X₁l₁t₁)/-110°/90° according to standard IEEE 1949 Std-176.
Each substrate is assumed to be a plate that is cut in a single crystal material of Langasite. The plate here is cut according to a double-rotation cut defined by the nomenclature (YᵢXᵢlᵢtᵢ)/θᵢ/ψᵢ of standard IEEE 1949 Std-176. This standard is used for defining the crystal orientation of the Langasite substrate. θᵢ defines the cut angle and and ψᵢ defines the propagation direction respectively. The angle ψᵢ is equal to 90° for surface transverse waves on material being part of the trigonal 32 symmetry class such as Quartz, GaPO₄ and Langasite and all its variants.

It should be noted that two angles are defined but only the first angle θᵢ corresponds to a cut angle implying a rotation of the substrate for cutting. The second angle ψᵢ is defined in the cut plane by a rotation around the axis, which is normal to the substrate (i.e. normal to the wave propagation plane).

The Xᵢ, Yᵢ, Zᵢ axis set represents the crystallographic axis set of the Langasite crystal, with i an index equal to 1 when the crystal is the substrate of the resonator 10 and equal to 2 when the crystal is the substrate of the resonator 20. The Langasite plate is characterized by three dimensions, its thickness *tᵢ*, its length *lᵢ* and its width *wᵢ*, as illustrated in **Figure 3****.**

A rotation around *lᵢ* is noted θᵢ and a rotation around *tᵢ* is noted ψᵢ. YᵢXᵢ defines the position before rotation of the cut plate, Yᵢ being the axis (before rotation) according to which the thickness is considered and Xᵢ being the axis (before rotation) according to which the length is considered.

For example, a single-rotation cut, defined in standard manner by (YᵢXᵢ*lᵢ*)/θᵢ is illustrated on **Figure 4****.** The single-rotation cut is obtained by departing from the cut plate YᵢXᵢ and rotating only around the axis *lᵢ* with angle θᵢ.

The Xᵢ', Yᵢ', Zᵢ' axis set represents the crystallographic axes of the Langasite crystal after rotation.

In a general manner, surface transverse waves can be excited by piezoelectric coupling on substrates of particular crystalline orientations such as single rotation quartz cuts. The excitation conditions are met for a propagation direction of the wave collinear to the Z pivoted axis (noted Z'). The wave propagation direction is represented by the arrow A on Figure 4.

For example, a double-rotation cut, defined in standard manner by (YᵢXᵢ*l*ᵢ*t*ᵢ)/θᵢ/ψᵢ is illustrated on **Figure 5****.** The double-rotation cut is obtained by departing from the cut plate YᵢXᵢ and rotating successively around the axis *lᵢ* with angle θᵢ and around the axis *tᵢ* with angle ψᵢ.

For example, the Langasite substrate 10 has a thickness *t₁* of 250 to 500 µm, a length *l₁* of 500 to 5000 µm and width *w₁* of 300 to 2000 µm. For example, the Langasite substrate 20 has a thickness *t₂* of 250 to 500 µm, a length *l₂* of 500 to 5000 µm and width *w₂* of 300 to 2000 µm.

By having a first double-rotation cut such as (Y₁X₁*l*₁t₁)/-80°/90° and a second double-rotation cut such as (Y₁X₁*l₁t₁*)/-110°/90°, the two separated Langasite substrates 10 and 11 are thus selected for their specific thermal sensitivity in order to exhibit a frequency-differential temperature behaviour. The surface transverse wave propagation direction for the substrate 10 is collinear to the Z₁' crystal axis (i.e. the pivoted Z₁ crystal axis) and the surface transverse wave propagation direction for the substrate 20 is collinear to Z₂' crystal axis (i.e. the pivoted Z₂ crystal axis).

One of advantages of the differential structure according to the invention is that frequency difference of resonators is substantially linear as a function of the temperature and residual non-linearities can be corrected. Each surface transverse wave resonator 11 and 21 is characterized by a resonance frequency which is a function of the temperature.

The measurement range of temperature using surface transverse sensor is depending on the substrate material used in the measurements. Langasite substrate is a crystal that has a temperature point very high where the substrate loses its piezoelectric properties, thereby allowing it to operate at high temperature (upper than 300°C for instance).

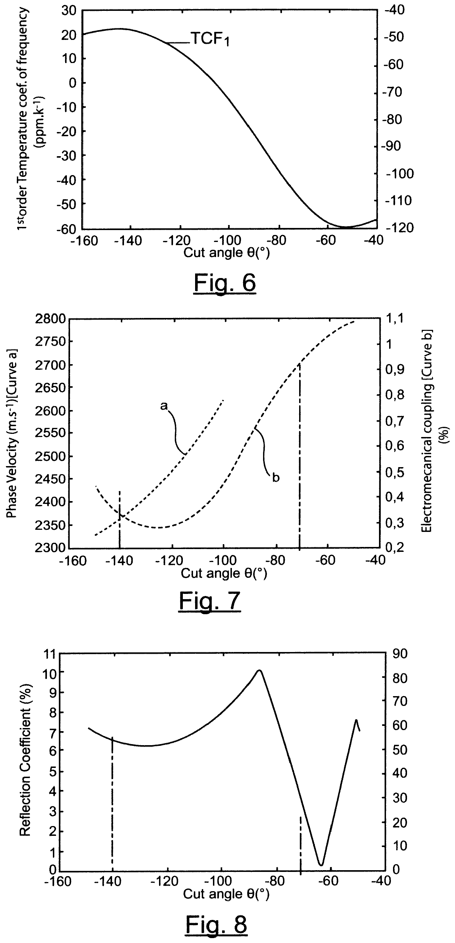

**Figure 6** shows the evolution of the frequency-temperature behaviour for θ cut angles varying between -160° and -40° for a Langasite substrate.

It may be recalled that the Temperature Coefficient of Frequency (hereafter called TCF) of surface transverse wave is measured based on resonant frequency changes of the resonator response due to temperature variations. TCF reflects the frequency drift under temperature effect.

This shows that it is possible to select a couple of θ crystal cuts allowing a differential thermal sensitivity in excess of 80 ppm.K¹ which is similar to what is accessible with prior art sensor, i.e. on quartz using Rayleigh waves. This allows for an optimization of a temperature sensor based on two independent resonators selected for their respective TCF. At first order (TCF₁), one can choose two cuts according to the targeted measurement range. For instance, measuring a temperature in a 100°C range in the 434 MHz-centered ISM band (bandwidth 1.7 MHz) allows for a max differential TCF of 39 ppm.K⁻¹, which can be advantageously achieved using (Y₁X₁*l₁t₁*)/-80°/90° and (Y₁X₁*l₁t₁*)/-110°/90° cuts.

This graph reveals that the amplitude of the STW resonator response strongly depends on the Langasite crystal orientation. The Temperature Coefficient of Frequency is chosen as a function of the crystalline orientation. Thus it is possible to select accurately the (YᵢXᵢ*l*_{y}*tᵢ*)/θᵢ/ψᵢ double-rotation cut, and more precisely the θᵢ cut angle, for each resonator 11 and 21, as a function of the intended application. The Temperature Coefficient of Frequency can be chosen for example to meet the requirements of the standard ISM.

**Figure 7** shows the evolution of surface transverse wave propagation velocity (curve b) and electromechanical coupling coefficient (curve a) for θ cut angles varying between -160° and -40° for a Langasite substrate.

It may be recalled that electromechanical coupling coefficient (k²) reflects the efficiency of conversion from electric energy to mechanical energy and vice versa.

The sensor according to the invention exists in a wide range of θ cut angles. In a particular range where the θ cut angles is -110° to -70°, an electromechanical coupling coefficient of above 0.5% is available.

**Figure 8** shows the evolution of the reflection coefficient on a single electrode for θ cut angles varying between -160° and -40° for a Langasite substrate.

The reflection coefficient reflects the resonator effectiveness (i.e. the capability of the Bragg mirror to efficiently reflect waves toward the interdigitated transducer). One can note that the reflection coefficient dramatically drops down in the θ cut angle range [-75°;-55°]. At -65°, the reflection coefficient falls down about to zero, meaning the Bragg Mirror will very poorly operate in that region. As a consequence, the optimisation of the resonator must account for such a condition, avoiding cut angle for which this coefficient does not reach a minimum value of 1% per electrode using electrodes composed of a metal in the following list: Pt, Ni, Mo, W, Cu, Cr, Au, Ir, Pd, Ta, Ti, Zr, and more generally conductive materials composed of these metals and all other metals exhibiting mass density overcoming the one of LGS.

The inventors also note that in the angle range [-65;-50°], the directivity of the interdigitated transducer using the above mentioned metals changes from 0 to 90°, yielding care in the design of the resonator as the resonance will occur at the upper edge of the frequency stop-band when the directivity is 90° (the classical configuration for which directivity is 0° will be therefore preferred).

The inventors have also discovered that, the θᵢ cut angles of Langasite comprised between -140° < θᵢ < -70° are characterized by a high electromechanical coupling, and more specifically that this electromechanical coupling can reach values in excess of 1% when using electrodes in the aforesaid metal list with relative thickness h/λ_{ac} overcoming 2% in the cut angle range [-140°;-70°]. As the electromechanical coupling is dependent on the metal thickness, the design process of the differential sensor according to the invention must account for this feature as one mandatory aspect of SAW differential sensors is to associate two resonators exhibiting similar electrical response. This assumes that the electromechanical coupling, the quality factor, the amplitude of the conductance and the static capacitance (the slope of the susceptance) of both sensors are equal within an error of less than 5% of the nominal value.

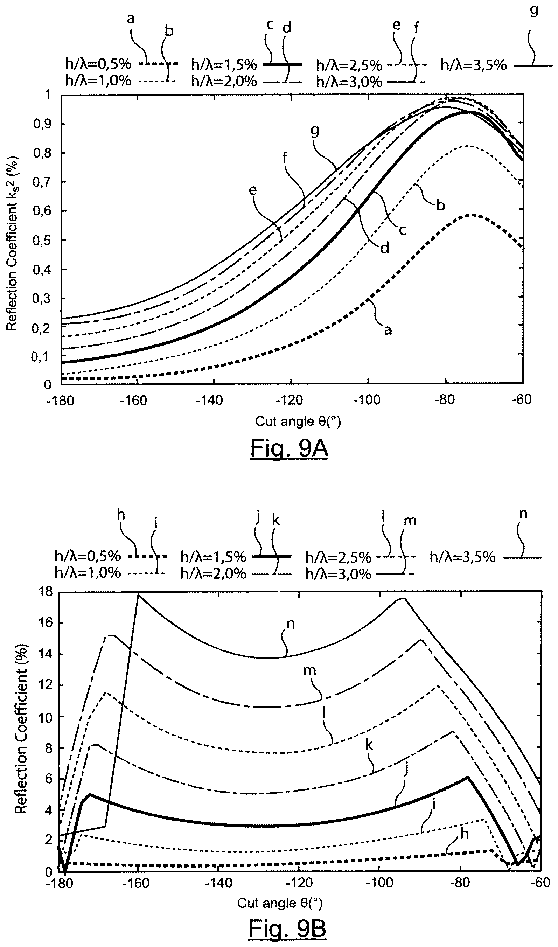

**Figures 9A** and **9B** show a set of theoretical curves highlighting the impact of the nature and structural features of the electrode arrays on the electromechanical coupling and reflection coefficients of the sensor according to the invention.

These figures exhibit the evolution of the electromechanical coupling (figure 9A) and the reflective coefficient (figure 9B) of Langasite-based- crystal surface transverse wave resonators as a function of the θ cut angles varying between -180° and -60°. The electrodes are made of Platinum and the periodic array is considered to be infinite. The relative metallisation ratio a/p has been defined as to be equal to 0.5. Each curve (referenced as curves *α* to *g* and curves *h* to *m*) is associated with a different value of relative thickness h/λ_{ac}. The computation has been carried out with the physical constants of BUNGO ET Al (Proc. 27th EM Symp. - 1998, page 125).

These curves shows that, for the range of θ cut angles comprised between -140° and -70°, more the relative thickness of the electrodes rises above 0,5%, more the electromechanical coupling and reflection coefficients increases, with a maximum of electromechanical coupling around the cut angle -80°. The analysis of the impact of the metallisation on the wave properties under an electrode array showed that the wave mode undergoes a change of their properties from a threshold value of metal thickness. For a relative metallisation ratio a/p of 0.5, beyond 4% of relative metallization thickness h/λ_{ac} the resonance conditions changes.

These curves show the exceptional propriety of the increase of the electromechanical coupling coefficient of the STW as a function of the metal thickness for the cut angle range [-140°;-60°].

More generally, the inventors have found that the electrodes of arrays of the first and second surface acoustic wave resonators, when they are made of Platinum (Pt) and they has a relative metallization thickness h/λ_{ac} comprised between 0.5% and 7%, and a relative metallisation ratio a/p comprised between 0.3 and 0.7, the resonator effectiveness (*R*) as well as the electromechanical coupling (*kₛ²*) are significantly improved.

Other computational investigations have been performed with other metallic materials such as Nickel (Ni), Molybdenum (Mo) or Tungsten (W), and have shown that the electromechanical coupling and reflection coefficients follow the same trends.

The inventors have found that the electrodes of arrays of the first and second surface acoustic wave resonators, when they are made of Nickel (Ni) and they has a relative metallization thickness h/λ_{ac} comprised between 0.5% and 10 %, and a relative metallisation ratio a/p comprised between 0.3 and 0.7, the resonator effectiveness (*R*) as well as the electromechanical coupling (*kₛ²*) are significantly improved. The analysis of the impact of the metallisation on the wave properties under an electrode array showed that the wave mode undergoes a change of their properties from a threshold value of metal thickness equal to 10%.

The inventors have found that the electrodes of arrays of the first and second surface acoustic wave resonators, when they are made of Molybdenum (Mo) and they has a relative metallization thickness h/λ_{ac} comprised between 0.5% and 9%, and a relative metallisation ratio a/p comprised between 0.3 and 0.7, the resonator effectiveness (*R*) as well as the electromechanical coupling (*kₛ²*) are significantly improved. The analysis of the impact of the metallisation on the wave properties under an electrode array showed that the wave mode undergoes a change of their properties from a threshold value of metal thickness equal to 9%.

The inventors have found that the electrodes of arrays of the first and second surface acoustic wave resonators, when they are made of Tungsten (W) and they has a relative metallization thickness h/λ_{ac} comprised between 0,5% and 7%, and a relative metallisation ratio a/p comprised between 0.3 and 0.7, the resonator effectiveness (*R*) as well as the electromechanical coupling (*kₛ²*) are significantly improved. The analysis of the impact of the metallisation on the wave properties under an electrode array showed that the wave mode undergoes a change of their properties from a threshold value of metal thickness equal to 7%.

## Claims

1. A differential temperature measuring device (100) comprising:
- a first piezoelectric substrate (10) made of a single crystal of lanthanum gallium silicate on which is arranged a first surface transverse wave resonator (11) having a first predetermined resonance configuration,
- a second piezoelectric substrate (20) made of a single crystal of lanthanum gallium silicate on which is arranged a second surface transverse wave resonator (21) having a second predetermined resonance configuration identical to said first predetermined resonance configuration,
wherein said first piezoelectric substrate has a double-rotation cut which is different from the double-rotation cut angle of said second piezoelectric substrate, **characterized in that** when said first piezoelectric substrate has a crystalline orientation defined by a X₁, Y₁, Z₁ crystal axis set, said first surface acoustic wave resonator comprises in a plane defined by the X₁, Z₁ axes an array of electrodes whose orientation is parallel with respect to the X₁ crystal axis and perpendicular with respect to the Z₁ crystal axis,
when said second piezoelectric substrate has a crystalline orientation defined by X₂, Y₂, Z₂ crystal axis set, said second surface acoustic wave resonator comprises in a plane defined by the X₂, Z₂ axes an array of electrodes whose orientation is parallel with respect to the X₂ crystal axis and perpendicular with respect to the Z₂ crystal axis,
said array of electrodes of each of said first and second surface acoustic wave resonators having:
- a relative thickness that satisfies the following equality: 0.5% < h/λ_{ac} < 13% with:
h the thickness of electrodes of said first and second surface acoustic wave resonators,
λ_{ac} the acoustic wavelength of said first and second surface acoustic wave resonators;
- a relative metallisation ratio that satisfies the following equality: 0.3 < a/p < 0.7 with:
a the width of the electrodes of said first and second surface acoustic wave resonators;
p the mechanical period of said array of electrodes.

2. Device according to claim 1, wherein said first and second piezoelectric substrates have each a double-rotation cut and a propagating direction determined such that cut angles represented by the nomenclature (YᵢXᵢ*lᵢtᵢ*)/θᵢ/ψᵢ of standard IEEE 1949 Std-176 are such as: -140° < θᵢ < -70° and ψᵢ = 90°,
with:
- *lᵢ* being the length of the piezoelectric substrate i
- *tᵢ*, being the thickness of the piezoelectric substrate i
- Xᵢ, Yᵢ, Zᵢ being the crystallographic axis set of the piezoelectric substrate i
- θᵢ being the cut angle allowing a rotation around the piezoelectric substrate length *lᵢ*
- ψᵢ being the cut angle allowing a rotation around the piezoelectric substrate thickness *tᵢ*
- YᵢXᵢ being a plane defined by the axes Yᵢ and Xᵢ from which rotations of θᵢ and ψᵢ cut angles are performed, Xᵢ and Yᵢ being the axes according to which the piezoelectric substrate length *lᵢ* and thickness *tᵢ* are considered respectively
- i being an index equal to 1 for said first piezoelectric substrates and equal to 2 for said second piezoelectric substrates,
and wherein the θᵢ cut angle of said first piezoelectric substrate is different from the θᵢ cut angle of said second piezoelectric substrate.

3. Device according to claim 1 or 2, wherein said array of electrodes of each of said first and second surface acoustic wave resonators comprises a periodic array of inter-digitated electrodes (12) placed between two reflector arrays (13), said periodic array of inter-digitated electrodes acting as a central resonant cavity and said two reflector arrays acting as Bragg mirrors.

4. Device according to any one of claims 1 to 3, wherein said array of electrodes of each of said first and second surface acoustic wave resonators is made of a single metal or a combination of metals belonging to the group comprising: Pt, Ni, Mo, W, Cu, Cr, Au, Ir, Pd, Ta, Ti, Zr.

5. Device according to any one of claims 1 to 4, wherein said array of electrodes of each of said first and second surface acoustic wave resonators are made of Platinum (Pt) and wherein the relative thickness satisfies h/λ_{ac} < 7 %.

6. Device according to any one of claims 1 to 4, wherein said array of electrodes of each of said first and second surface acoustic wave resonators are made of Nickel (Ni) and wherein the relative thickness satisfies h/λ_{ac} < 10%.

7. Device according to any one of claims 1 to 4, wherein said array of electrodes of each of said first and second surface acoustic wave resonators are made of Molybdenum (Mo) and wherein the relative thickness satisfies h/λ_{ac} < 9%.

8. Device according to any one of claims 1 to 4, wherein said array of electrodes of each of said first and second surface acoustic wave resonators are made of Tungsten (W) and wherein the relative thickness satisfies h/λ_{ac} < 7%.

9. Device according to any one of claims 1 to 8, wherein said array of electrodes of each of said first and second surface acoustic wave resonators has a thickness h comprised between 100 nm and 500 nm.

## Patentansprüche

1. Eine differentielle Temperaturmessvorrichtung (100) aufweisend:
- ein erstes piezoelektrisches Substrat (10), hergestellt aus einem einzigen Kristall von Lanthangalliumsilikat, auf dem ein erster Oberflächenquerwellenresonator (11) mit einer ersten vorgegebenen Resonanzkonfiguration angeordnet ist,
- ein zweites piezoelektrisches Substrat (20), hergestellt aus einem einzigen Kristall von Lanthangalliumsilikat, auf dem ein zweiter Oberflächenquerwellenresonator (21) mit einer zweiten vorgegebenen Resonanzkonfiguration identisch zu der ersten vorgegebenen Resonanzkonfiguration angeordnet ist,
wobei das erste piezoelektrische Substrat einen Doppelrotationsschnitt hat, der unterschiedlich ist von dem Doppelrotationsschnittwinkel des zweiten piezoelektrischen Substrats, dadurch charakterisiert, dass
wenn das erste piezoelektrische Substrat eine Kristallorientierung, definiert durch eine X₁, Y₁, Z₁-Kristallachsenmenge, hat, der erste akustische Oberflächenwellenresonator in einer durch die X₁, Z₁-Achsen definierten Ebene eine Anordnung von Elektroden aufweist, deren Orientierung parallel bezüglich der X₁-Kristallachse und senkrecht bezüglich der Z₁-Kristallachse ist,
wenn das zweite piezoelektrische Substrat eine Kristallorientierung, definiert durch eine X₂, Y₂, Z₂-Kristallachsenmenge, hat, der zweite akustische Oberflächenwellenresonator in einer durch die X₂, Z₂-Achsen definierten Ebene eine Anordnung von Elektroden aufweist, deren Orientierung parallel bezüglich der X₂-Kristallachse und senkrecht bezüglich der Z₂-Kristallachse ist,
wobei die Anordnung von Elektroden von jedem des ersten und zweiten akustischen Oberflächenresonators aufweist:
- Eine relative Dicke, die folgende Ungleichung erfüllt: 0,5% < h/λ_{ac} < 13% mit:
h der Elektrodendicke des ersten und zweiten akustischen Oberflächenwellenresonators,
λ_{ac} die akustische Wellenlänge des ersten und zweiten akustischen Oberflächenwellenresonators;
- Ein relatives Metallisierungsverhältnis, das die folgende Ungleichung erfülllt: 0,3 < a/p < 0,7 mit:
a der Breite der Elektroden des ersten und zweiten akustischen Wellenresonators;
p die mechanische Periode der Anordnung von Elektroden.

2. Vorrichtung gemäß Anspruch 1, wobei das erste und zweite piezoelektrische Substrat jedes einen Doppelrotationsschnitt und eine Propagationsrichtung haben, dass die Schnittwinkel, repräsentiert durch die Nomenklatur (YᵢXᵢlᵢtᵢ)/θᵢψᵢ des Standards IEEE 1949 Std-176, so sind dass: -140° < θᵢ < -70° und ψᵢ = 90°,
mit
- lᵢ der Länge des piezoelektrischen Substrats i
- tᵢ der Dicke des piezoelektrischen Substrats i
- Xᵢ, Yᵢ, Zᵢ der kristallographischen Achsenmenge des piezoelektrischen Substrats i
- θᵢ dem Schnittwinkel, der eine Rotation um die Länge lᵢ des piezoelektrischen Substrats ermöglicht
- ψᵢ dem Schnittwinkel, der eine Rotation um die Dicke tᵢ des piezoelektrischen Substrats ermöglicht
- YᵢXᵢ einer Ebene, die durch die Achsen Yᵢ und Xᵢ definiert ist, von denen Rotationen der Schnittwinkel θᵢ und ψᵢ durchgeführt werden, wobei Xᵢ und Yᵢ die Achsen sind, gemäß denen die Länge lᵢ bzw. die Dicke tᵢ des piezoelektrischen Substrats betrachtet werden
- i ein Index gleich 1 für die ersten piezoelektrischen Substrate und gleich 2 für die zweiten piezoelektrischen Substrate ist,
und wobei der Schnittwinkel θᵢ des ersten piezoelektrischen Substrats unterschiedlich von dem Schnittwinkel θᵢ des zweiten piezoelektrischen Substrats ist.

3. Vorrichtung gemäß Anspruch 1 oder 2, wobei die Anordnung von Elektroden von jedem des ersten und zweiten akustischen Oberflächenwellenresonators eine periodische Anordnung von verzahnten Elektroden (12) aufweist, die zwischen zwei Reflektoranordnungen (13) platziert sind, wobei die periodische Anordnung von verzahnten Elektroden als ein zentraler Resonanzhohlraum wirkt und die zwei Reflektoranordnungen als Bragg-Spiegel wirken.

4. Vorrichtung gemäß einem der Ansprüche 1 bis 3, wobei die Anordnung von Elektroden des von jedem des ersten und zweiten akustischen Oberflächenwellenresonators aus einem einzigen Metall oder einer Kombination von Metallen hergestellt ist, die zu Gruppe gehören aufweisend: Pt, Ni, Mo, W, Cu, Cr, Au, Ir, Pd, Ta, Ti, Zr.

5. Vorrichtung gemäß einem der Ansprüche 1 bis 4, wobei die Anordnung von Elektroden von jedem des ersten und zweiten Oberflächenwellenresonators aus Platin (Pt) hergestellt ist und wobei die relative Dicke h/λ_{ac} < 7% erfüllt.

6. Vorrichtung gemäß einem der Ansprüche 1 bis 4, wobei die Anordnung von Elektroden von jedem des ersten und zweiten Oberflächenwellenresonators aus Nickel (Ni) hergestellt ist und wobei die relative Dicke h/λ_{ac} < 10% erfüllt.

7. Vorrichtung gemäß einem der Ansprüche 1 bis 4, wobei die Anordnung von Elektroden von jedem des ersten und zweiten Oberflächenwellenresonators aus Molybdän (Mo) hergestellt ist und wobei die relative Dicke h/λ_{ac} < 9% erfüllt.

8. Vorrichtung gemäß einem der Ansprüche 1 bis 4, wobei die Anordnung von Elektroden von jedem des ersten und zweiten Oberflächenwellenresonators aus Wolfram (W) hergestellt ist und wobei die relative Dicke h/λ_{ac} < 7% erfüllt.

9. Vorrichtung gemäß einem der Ansprüche 1 bis 8, wobei die Anordnung von Elektroden von jedem des ersten und zweiten Oberflächenwellenresonators eine Dicke h hat, die zwischen 100nm und 500nm liegt.

## Revendications

1. Dispositif de mesure de température différentielle (100) comprenant :
- un premier substrat piézoélectrique (10) constitué d'un monocristal de silicate de lanthane-gallium sur lequel est agencé un premier résonateur à onde transversale de surface (11) ayant une première configuration de résonance prédéterminée,
- un second substrat piézoélectrique (20) constitué d'un monocristal de silicate de lanthane-gallium sur lequel est agencé un second résonateur à onde transversale de surface (21) ayant une seconde configuration de résonance prédéterminée identique à ladite première configuration de résonance prédéterminée,
dans lequel ledit premier substrat piézoélectrique présente une coupe par double rotation qui est différente de l'angle de coupe par double rotation dudit second substrat piézoélectrique,
**caractérisé en ce que**
lorsque ledit premier substrat piézoélectrique a une orientation cristalline définie par un ensemble d'axes de cristaux X₁, Y₁, Z₁, ledit premier résonateur à onde acoustique de surface comprend, dans un plan défini par les axes X₁, Z₁, une rangée d'électrodes dont l'orientation est parallèle à l'axe de cristal X₁ et perpendiculaire à l'axe de cristal Z₁,
lorsque ledit second substrat piézoélectrique a une orientation cristalline définie par un ensemble d'axes de cristaux X₂, Y₂, Z₂, ledit second résonateur à onde acoustique de surface comprend, dans un plan défini par les axes X₂, Z₂, une rangée d'électrodes dont l'orientation est parallèle à l'axe de cristal X₂ et perpendiculaire à l'axe de cristal Z₂,
ladite rangée d'électrodes de chacun desdits premier et second résonateurs à onde acoustique de surface ayant :
- une épaisseur relative qui vérifie l'égalité suivante : 0,5 % < h/λ_{ac} < 13 % avec :
h l'épaisseur d'électrodes desdits premier et second résonateurs à onde acoustique de surface,
λ_{ac} la longueur d'onde acoustique desdits premier et second résonateurs à onde acoustique de surface ;
- un taux de métallisation relatif qui vérifie l'égalité suivante : 0,3 < a/p < 0,7 avec :
a la largeur des électrodes desdits premier et second résonateurs à onde acoustique de surface ;
p la période mécanique de ladite rangée d'électrodes.

2. Dispositif selon la revendication 1, dans lequel lesdits premier et second substrats piézoélectriques présentent chacun une coupe par double rotation et une direction de propagation déterminée de telle sorte que les angles de coupe représentés par la nomenclature (YᵢXᵢ*lᵢtᵢ*)/θᵢ/ψᵢ de la norme IEEE 1949 STd-176 sont tels que : -140° < θᵢ < -70° et ψᵢ = 90°,
avec :
- *lᵢ* étant la longueur du substrat piézoélectrique i
- *tᵢ* étant l'épaisseur du substrat piézoélectrique i
- Xᵢ, Yᵢ, Zᵢ étant l'ensemble d'axes cristallographiques du substrat piézoélectrique i
- θᵢ étant l'angle de coupe permettant une rotation autour de la longueur de substrat piézoélectrique *lᵢ*
- ψᵢ étant l'angle de coupe permettant une rotation autour de l'épaisseur de substrat piézoélectrique *tᵢ*
- YᵢXᵢ étant un plan défini par les axes Yᵢ et Xᵢ à partir duquel les rotations des angles de coupe θᵢ et ψᵢ sont réalisées, Xᵢ et Yᵢ étant les axes selon lesquels la longueur *lᵢ* et l'épaisseur *tᵢ* de substrat piézoélectrique sont respectivement considérées
- i étant un indice égal à 1 pour lesdits premiers substrats piézoélectriques et égal à 2 pour lesdits seconds substrats piézoélectriques,
et dans lequel l'angle de coupe θᵢ dudit premier substrat piézoélectrique est différent de l'angle de coupe θᵢ dudit second substrat piézoélectrique.

3. Dispositif selon la revendication 1 ou 2, dans lequel ladite rangée d'électrodes de chacun desdits premier et second résonateurs à onde acoustique de surface comprend une rangée périodique d'électrodes interdigitées (12) placées entre deux rangées de réflecteurs (13), ledit réseau périodique d'électrodes interdigitées faisant office de cavité de résonance centrale et lesdites deux rangées de réflecteurs servant de miroirs de Bragg.

4. Dispositif selon l'une quelconque des revendications 1 à 3, dans lequel ladite rangée d'électrodes de chacun desdits premier et second résonateurs à onde acoustique de surface est constituée d'un métal unique ou d'une combinaison de métaux appartenant au groupe comprenant : Pt, Ni, Mo, W, Cu, Cr, Au, Ir, Pd, Ta, Ti, Zr.

5. Dispositif selon l'une quelconque des revendications 1 à 4, dans lequel ladite rangée d'électrodes de chacun desdits premier et second résonateurs à onde acoustique de surface est constituée de Platine (Pt) et dans lequel l'épaisseur relative vérifie l'équation h/λ_{ac} < 7 %.

6. Dispositif selon l'une quelconque des revendications 1 à 4, dans lequel ladite rangée d'électrodes de chacun desdits premier et second résonateurs à onde acoustique de surface est constituée de Nickel (Ni) et dans lequel l'épaisseur relative vérifie l'équation h/λ_{ac} < 10 %.

7. Dispositif selon l'une quelconque des revendications 1 à 4, dans lequel ladite rangée d'électrodes de chacun desdits premier et second résonateurs à onde acoustique de surface est constituée de Molybdène (Mo) et dans lequel l'épaisseur relative vérifie l'équation h/λ_{ac} < 9 %.

8. Dispositif selon l'une quelconque des revendications 1 à 4, dans lequel ladite rangée d'électrodes de chacun desdits premier et second résonateurs à onde acoustique de surface est constituée de Tungstène (W) et dans lequel l'épaisseur relative vérifie l'équation h/λ_{ac} < 7 %.

9. Dispositif selon l'une quelconque des revendications 1 à 8, dans lequel ladite rangée d'électrodes de chacun desdits premier et second résonateurs à onde acoustique de surface a une épaisseur h comprise entre 100 nm et 500 nm.
